(19) Europäisches Patentamt
European Patent Office
Office européen des brevets

(11) **EP 2 825 995 B1**

(12) **FASCICULE DE BREVET EUROPEEN**

(45) Date de publication et mention
de la délivrance du brevet:
**15.03.2017 Bulletin 2017/11**

(51) Int Cl.:
***G06K 9/00*** *(2006.01)*

(21) Numéro de dépôt: **12787770.2**

(86) Numéro de dépôt international:
**PCT/FR2012/052357**

(22) Date de dépôt: **16.10.2012**

(87) Numéro de publication internationale:
**WO 2013/135977 (19.09.2013 Gazette 2013/38)**

(54) **SYSTÈME POUR DÉTERMINER L'IDENTIFICATION D'UN APPAREIL PHOTOGRAPHIQUE A PARTIR D'UNE PHOTOGRAPHIE ET PROCÉDÉ MIS EN OEUVRE DANS UN TEL SYSTÈME**

SYSTEM ZUR IDENTIFIZIERUNG EINER DIGITALKAMERA VON EINEM BILD UND ENTSPRECHENDE DURCHFÜHRUNG VERFAHREN

SYSTEM FOR IDENTIFICATION OF A DIGITAL CAMERA STARTING FROM A PICTURE AND METHOD IMPLEMENTED WITH SAID SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2012 FR 1252209**

(43) Date de publication de la demande:
**21.01.2015 Bulletin 2015/04**

(73) Titulaire: **Université de Technologie de Troyes 10010 Troyes Cedex (FR)**

(72) Inventeurs:
• **RETRAINT, Florent**
  **10270 Courteranges (FR)**
• **COGRANNE, Rémi**
  **10130 Chamoy (FR)**

(74) Mandataire: **Novagraaf Technologies Bâtiment O2 2, rue Sarah Bernhardt CS90017 92665 Asnières-sur-Seine Cedex (FR)**

(56) Documents cités:
• **CHEN M ET AL: "Determining Image Origin and Integrity Using Sensor Noise", IEEE TRANSACTIONS ON INFORMATION FORENSICS AND SECURITY, IEEE, PISCATAWAY, NJ, US, vol. 2, no. 1, 1 mars 2008 (2008-03-01), pages 74-90, XP011204150, ISSN: 1556-6013**
• **TRAN VAN LANH ET AL: "A Survey on Digital Camera Image Forensic Methods", MULTIMEDIA AND EXPO, 2007 IEEE INTERNATIONAL CONFERENCE ON, IEEE, PI, 1 juillet 2007 (2007-07-01), pages 16-19, XP031123550, ISBN: 978-1-4244-1016-3**
• **FOI A ET AL: "Practical Poissonian-Gaussian Noise Modeling and Fitting for Single-Image Raw-Data", IEEE TRANSACTIONS ON IMAGE PROCESSING, IEEE SERVICE CENTER, PISCATAWAY, NJ, US, vol. 17, no. 10, 1 octobre 2008 (2008-10-01), pages 1737-1754, XP011248121, ISSN: 1057-7149 cité dans la demande**
• **M. GOLJAN: "Large Scale Test of Sensor Fingerprint Camera Identification", SPIE-IS&T, MEDIA FORENSICS AND SECURITY, vol. 7254, 2009, pages 72540I-1-*-12, XP002692615,**
• **LUKAS, J.; FRIDRICH, J.; GOLJAN, M.: "Digital camera identification from sensor pattern noise", INFORMATION FORENSICS AND SECURITY, IEEE TRANSACTIONS ON, vol. 1, no. 2, juin 2006 (2006-06), pages 205-214, XP002694371, cité dans la demande**
• **HEALEY, G.E.; KONDEPUDY, R: "Radiometric CCD camera calibration and noise estimation", IEEE TRANSACTION ON PATTERN ANALYSIS AND MACHINE INTELLIGENCE, vol. 16, no. 3, 1994, pages 267-276, XP002694372, cité dans la demande**

**Description**

## DOMAINE TECHNIQUE DE L'INVENTION

L'invention se rapporte à l'identification d'un appareil photographique plus particulièrement, l'invention concerne un système pour déterminer l'identification d'un appareil photographique à partir d'une photographie numérique. L'invention concerne aussi un procédé mis en oeuvre dans un tel système. Ces systèmes trouvent des applications importantes pour déterminer la provenance d'une photographie.

La criminalistique numérique ou la recherche de preuves dans un média numérique a connu un développement important au cours de la dernière décennie. Dans ce domaine les méthodes proposées se distinguent en deux catégories selon que l'on souhaite identifier le modèle d'appareil photographique ou l'appareil lui même (une instance d'un certain modèle).

De manière générale les méthodes d'identification d'un appareil photo peuvent être passives ou actives. Dans le cas des méthodes actives, les données numériques représentant le contenu de l'image sont modifiées afin d'insérer un identifiant (méthode dites de tatouage ou de watermarking). Lorsque l'image inspectée ne contient pas de tatouage, l'identification de l'appareil d'acquisition doit se faire à partir des données de l'image.

## ETAT DE LA TECHNIQUE ANTERIEURE

De nombreuses méthodes d'identification passives d'un appareil photographique ont été proposées. La plupart de ces méthodes sont basées sur la présence d'un bruit de non-uniformité de la photosensibilité (NUPS). Ces bruits de NUPS sont utilisés pour identifier l'appareil d'acquisition d'une image au travers d'une analyse comparative par corrélation dans l'article *"Digital camera identification from sensor pattern noise"*, Lukas, J.; Fridrich, J.; Goljan, M.; Information Forensics and Security, IEEE Transactions on , vol.1, no.2, pp. 205-214, June 2006 [Lukas2006, Sutcu2007, LI2010] ou encore avec une approche de reconnaissance de formes dans l'article "Determining Image Origin and Integrity Using Sensor Noise", Chen, M.; Fridrich, J.; Goljan, M.; Lukas, J.; Information Forensics and Security, IEEE Transactions on, vol.3, no.1, pp.74-90, March 2008 [Chen2008, Filler2008].

De même, les méthodes d'apprentissage supervisées ont également été appliquées à la problématique dans l'article "Image Steganography : Concept and Practice", M. Kharrazi, H. T. Sencar, N. Memon, Lecture Notes Series, Institute for Mathematical Sciences, National University of Singapore, 2004 [Kharrazi2004, Choi2006]. Cependant, ces méthodes possèdent des inconvénients majeurs tels que: 1) leur performances ne sont pas établies mais uniquement mesurées empiriquement en utilisant de grandes bases de données images et, 2) le bruit (NUPS) résulte de la présence de pixels dits « chauds » ou « morts » dans la matrice du capteur et la présence de ces derniers peut être facilement corrigée, ou au moins compensée par la calibration de l'appareil (photographie d'une mire par exemple).

La méthode proposée dans l'invention a pour but d'identifier de façon passive un modèle d'appareil photographique. Cette méthode est basée sur l'hétéroscédasticité du bruit présent dans une image. On sait que le bruit qui perturbe les pixels d'une photographie numérique dépend linéairement de l'intensité lumineuse incidente sur le pixel comme cela a été modélisé dans l'article "Radiometric CCD camera calibration and noise estimation", Healey, G.E.; Kondepudy, R, IEEE Transaction on Pattern Analysis and Machine Intelligence, vol.16, no.3, pp 267-276, 1994, [Healey 1994]. En outre une méthode été proposé dans l'article "Practical Poissonian-Gaussian Noise Modeling and Fitting for Single-Image Raw-Data", Foi, A.; Trimeche, M.; Katkovnik, V.; Egiazarian, K.; IEEE Transactions on Image Processing, vol.17, no.10, pp.1737-1754, Oct. 2008 [Foi 08], pour estimer les paramètres caractérisant cette dépendance entre la valeur moyenne des pixels et la variance du bruit d'acquisition. Les paramètres d'hétéroscédasticité du bruit, dépendent du modèle d'appareil photographique utilisé et peuvent donc servir à l'identification de ce dernier. En utilisant ce modèle paramétrique de l'hétéroscédasticité du bruit des images, la méthode d'identification proposée consiste en un rapport de vraisemblance afin de tester statistiquement si une image donnée provient d'un appareil photographique A ou d'un appareil photographique B. Les propriétés statistiques du rapport de vraisemblance ont été théoriquement établies ce qui permet de fixer à priori le seuil de décision permettant de respecter une probabilité d'erreur prescrite (décider A quand B est vraie ou inversement).

Il faut noter que cette propriété d'hétéroscédasticité du bruit des images a déjà été utilisée de façon ad-hoc, sans exploitation statistique du modèle paramétrique. A titre d'exemple dans l'article "Detection of digital processing of images through a realistic model of CCD noise", Maillard, J.-B.; Levesque, D.; Deschenes, F. International Conference on Pattern Recognition, ICPR, 8-11 Dec. 2008 [Maillard 2008], cette propriété est utilisée afin d'identifier dans une vidéo (succession d'images) les objets qui auraient éventuellement été ajoutés après l'acquisition.

L'article « Detection of digital processing of Images through a realistic model of CCD noise », [Maillard2008], décrit un processus pour détecter si une séquence vidéo a été prise par une ou au moins deux caméras. Cependant ce qui est décrit dans cet article ne correspond pas exactement à la détermination de l'identification d'un appareil photographique. Le procédé qui y est appliqué est par essence distinct de ce que propose l'invention.

L'article « Digital caméra identification from sensor pattern noise », [Lukas 2006], propose une méthode pour identifier des appareils numériques à partir d'images fondées sur des bruits de modèle de capteur. Pour chaque appareil (caméra), on détermine d'abord le bruit de motif de référence, qui sert comme une identification des empreintes digitales uniques. Ce résultat est obtenu en faisant la moyenne du bruit obtenu à partir de plusieurs images en utilisant un filtre de débruitage. Pour identifier l'appareil à partir d'une image donnée, on considère le bruit de modèle de référence en tant que filigrane à étalement de spectre ; la présence de l'image est établie en utilisant un détecteur de corrélation.

L'article « Determining Image Origin and Integrity Using Sensor Noise », [Chen2008], décrit un cadre pour identifier un appareil photo numérique à partir d'images numériques et pour révéler des images retouchées à l'aide du bruit non-uniformité photo-réponse (NUPS). Le principe de cette méthode est d'utiliser ce bruit de NUPS comme une empreinte stochastique unique pour chaque capteur d'image. Le NUPS est obtenu en utilisant un estimateur du maximum de vraisemblance dérivé d'un modèle simplifié de la sortie du capteur d'image.

L'invention a pour but de résoudre le problème de l'identification passive d'un modèle d'appareil photographique d'acquisition à partir d'une image donnée. Par identification passive, on entend une prise de décision dans le cas où l'image n'est pas supposée contenir d'information identifiant la source. Plus précisément, l'invention envisage de résoudre les problèmes suivants: 1) assurer qu'une photographie n'a pas été prise par un appareil donné lorsque cette dernière est compromettante ou, 2) à l'inverse garantir qu'une photographie inspectée a bien été prise par un modèle d'appareil photographique et non par un autre.

Ces procédés sont caractérisés par le fait que les probabilités d'erreurs du système sont garanties et peuvent être prédéfinies par un utilisateur, ce qui permet de certifier les résultats. Les exemples possibles d'application pratiques sont nombreux.

**EXPOSE DE L'INVENTION**

Le but de l'invention est de fournir un système pour déterminer l'identification d'un premier appareil photographique à partir d'une photographie, comportant un dispositif d'analyse de photographies pour traiter ladite photographie et un dispositif de traitement pour établir des statistiques à partir de ladite analyse, le système opérant ladite identification sur la base de paramètres « a » et « b » définissant un appareil photographique et répondant à la relation ci-dessous :

$$z_{m,n} \sim \mathcal{N}\left(y_{m,n},\, a y_{m,n} + b\right)$$

où $z_{m,n}$ est représentatif de la valeur d'un pixel de coordonnées (m,n) d'une photographie, N (..) représente une distribution gaussienne et $y_{m,n}$ est l'espérance mathématique du pixel situé à la position (m,n). Le système est caractérisé en ce qu'il comprend en outre un organe de sortie qui opère par comparaison statistique avec un deuxième appareil photographique pour déterminer si la photographie a été prise par ledit premier appareil ou ledit deuxième appareil.

De plus, l'organe de sortie fournit une indication sur l'identification d'un appareil photographique en certifiant l'exactitude de l'identification suivant une précision préalablement définie. Ainsi l'invention permet l'identification d'un appareil photographique en certifiant l'exactitude de l'identification, avec une précision préalablement définie.

L'invention concerne encore un procédé, mis en oeuvre dans un tel système, caractérisé en ce qu'il comporte les étapes suivantes :

- lecture de la photographie en vue de déterminer les matrices descriptives (K12),
- estimation du contenu et du bruit de l'image (K14),
- estimation de la variance des pixels par niveaux d'intensité estimée du contenu (K22),
- estimation des paramètres caractérisant la relation moyenne variance du bruit (K24),
- exécution de tests statistiques en vue de donner l'identification. (K26).

Avantageusement, à l'étape (K26) les tests statistiques sont exécutés en fonction de la probabilité d'erreur exigée, et une décision est prise.

Selon un mode de réalisation de l'invention, la photographie est en un format non compressé ou en un format compressé sans pertes.

L'invention concerne en outre l'utilisation du procédé ci-dessus pour la détection, de façon supervisée, de la falsification d'une zone dans une image.

L'invention concerne encore l'utilisation du procédé ci-dessus dans la recherche de preuves à partir d'une image compromettante.

L'invention concerne l'application du procédé ci-dessus dans des logiciels spécialisés, dans la recherche de preuves à partir de média numériques.

## BREVE DESCRIPTION DES FIGURES

D'autres caractéristiques, détails et avantages de l'invention ressortiront à la lecture de la description qui suit, en référence aux figures annexées, qui illustrent:

- la figure 1 montre un système pour déterminer l'identification d'un appareil photographique conforme à l'invention ;
- la figure 2 montre un organigramme explicitant le procédé mis en oeuvre dans le système conforme à l'invention ;
- les figures 3 et 4 présentent une série des paramètres caractérisant les propriétés d'hétéroscédasticité du bruit de quelques modèles d'appareils ;
- la figure 5 montre la comparaison des propriétés du bruit de trois appareils photographiques distincts ;
- la figure 6 montre les performances du système d'identification selon lequel seul un modèle d'appareil photographique potentiel est connu. Ces performances sont présentées sous la forme de courbes COR ("Caractéristique de Opérationnelle du Récepteur") et offrent une comparaison entre la puissance théoriquement calculée, la puissance empirique obtenue sur des images réelles et la puissance empirique obtenue par simulation ;
- la figure 7 montre les performances du système d'identification selon lequel aucun des appareils photographique n'est connu. Ces performances sont présentées sous la forme de courbes COR ("Caractéristique de Opérationnelle du Récepteur") et offre une comparaison entre la puissance théoriquement calculée, la puissance obtenue sur des images réelles et la puissance empirique obtenue par simulation ; et
- la figure 8 montre les valeurs du rapport de vraisemblance (statistique sur laquelle est fondé le système d'identification) calculé sur les colonnes d'une image de mire (bande grise allant du noir au blanc) lorsque l'appareil photographique est inconnu.

Pour plus de clarté, les éléments identiques ou similaires sont repérés par des signes de référence identiques sur l'ensemble des figures.

## DESCRIPTION DETAILLEE

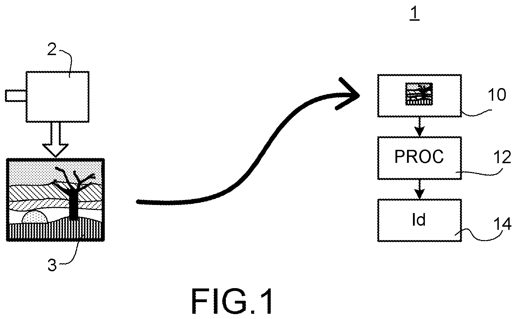

La figure 1, représente un système pour déterminer l'identification d'un appareil photographique. La référence 1 indique le système et la référence 2 l'appareil photographique qui a pris une photographie 3.

C'est à partir de cette photographie que le système 1 va déterminer l'appareil photographique 2 qui a pris cette photographie. Ce système se compose d'un analyseur de photo qui va examiner cette photographie 3. De préférence la photographie se présente sous forme de fichier non compressé (ou compressé sans pertes) apte au traitement qui va suivre. Le format du type RAW (*format* de fichier pour les images numériques) est un format apte à ce traitement.

Le système 1 peut être mis en oeuvre sur un ordinateur du type PC. Ce système 1 est muni d'un organe d'entrée 10 pour pouvoir accueillir les données de la photographie 3. Ces données sont traitées par un organe de traitement 12 qui met en oeuvre un traitement qui sera explicité ci-dessous. Un organe de sortie 14 fournira une indication sur l'identification de l'appareil photographique responsable à l'origine de ladite photographie.

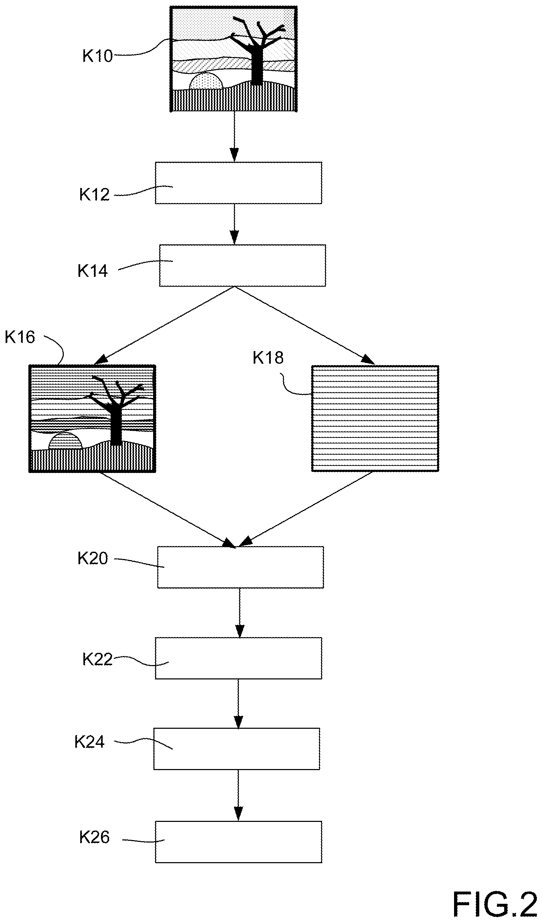

La figure 2 est un organigramme explicitant le procédé conforme à l'invention. A la première étape, montrée à la case K10, la photographie numérique 2 est vue comme une ou plusieurs matrices dont les éléments représentent la valeur de chacun des pixels. Dans le cas d'une image en niveau de gris (parfois appelée « noir et blanc ») la photographie peut être représentée par une unique matrice : $Z = z_{m,n}$ avec $1 \leq m \leq M$ et $1 \leq n \leq N$

Pour les images en couleurs, trois couleurs distinctes sont utilisées, usuellement le rouge, le vert et le bleu. Ainsi, une image est assimilable à 3 matrices distinctes :

$$Z = z_{m,n}^k$$ avec $1 \leq k \leq 3$ une matrice par canal de couleurs.

La seconde étape, case K12, consiste à séparer les différents canaux de couleurs, lorsque l'image analysée est en couleurs. La suite des opérations étant réalisées de manière identique avec chacune des matrices représentant les canaux de couleurs, il sera considéré que l'image est représentée par une unique matrice l'indice k est omis.

Lors de l'acquisition d'une photographie numérique, des erreurs de mesure d'origine distincte corrompent légèrement l'intensité enregistrée pour chacun des pixels. La valeur de chacun des pixels peut être considérée comme la somme d'un bruit aléatoire (représentant l'ensemble des erreurs de mesures) et d'un contenu déterministe :

$$z_{m,n} = y_{m,n} + \xi_{m,n}$$

Le bruit présent dans les photographies numériques, présente la propriété d'être hétéroscédastique : Les propriétés stochastiques (aléatoires) de bruit ne sont pas constantes sur l'ensemble des pixels de l'image. Plus précisément, la valeur de chaque pixel dépend linéairement du nombre de photons incidents noté $N_{pm,n}$. La conversion photo-électrique peut être assimilée à un processus de comptage de Poisson. Aussi, le nombre d'électrons collectés au sein de chacun des pixels est donné par :

$$Ne_{m,n} \sim P(r_{m,n} Np_{m,n} + Nt_{m,n}) \qquad (1)$$

avec $r_{m,n}$ qui est le facteur de conversion représentant, entre autre, la transmittance des filtres optiques et la sensibilité quantique (nombre moyen d'électrons générés par photon incident) et avec $N_{t_{m,n}}$ le nombre moyen d'électrons d'origine thermique collectés.

On peut considérer, en première approximation, que la photo-sensibilité $r_{m,n}$ ainsi que le bruit thermique $N_{t_{m,n}}$ sont constants pour l'ensemble des pixels d'un appareil photographique donné .(voir [Healey1998]). Par conséquent on omettra les indices m et n de ces quantités. Les électrons collectés dans chacun des pixels sont ensuite transférés à une unité de lecture de charge. Durant ces phases de transfert et de lecture, plusieurs sources des phénomènes parasites interviennent ; ces dernières peuvent être modélisées comme une variable aléatoire Gaussienne (voir [Healey1998]). Ainsi, la valeur enregistrée d'un pixel $z_{m;n}$ est donnée par :

$$z_{m,n} \sim aN(Ne_{m;n}, \sigma^2) \qquad (2)$$

où a est un paramètre de sensibilité linéairement dépendant du facteur ISO de l'appareil photographique et défini par l'utilisateur.

En raison du grand nombre de photons incidents sur les capteurs, il est possible d'approximer avec une grande précision le processus de comptage par une variable aléatoire Gaussienne.

En notant dans la suite $y_{m;n} = a(rNp_{m;n} + Nt)$ l'espérance mathématique (moyenne) du pixel à la position (m; n), les équations (1) et (2) permettent d'écrire la valeur $z_{m;n}$ comme suit, voir [Healey94,Foi2008]:

$$\begin{aligned} z_{m,n} &\sim N(a(rNp_{m,n} + Nt_{m,n}), a^2(rNp_{m,n} + Nt) + \sigma^2)) \\ &\sim N(y_{m,n}, ay_{m,n} + b) \end{aligned} \qquad (3)$$

avec $b = a^2\sigma^2$,

Il est à noter que les paramètres a et b varient pour différents modèles d'appareils photographiques et peuvent donc être utilisés pour permettre une identification de ces derniers..

La troisième étape, case K14, consiste en une séparation du contenu, case K16, et du bruit de l'image, case K18. Il faut préciser que ce problème fait l'objet de travaux de recherche et que plusieurs solutions ont été proposées. Dans le cas des travaux présentés, une méthode publiée dans la littérature spécialisée à été implémentée (voir [Foi2008]). Brièvement, le principe de cette méthode est d'utiliser une décomposition de l'image sur une base d'ondelettes en utilisant les coefficients de basses fréquences comme estimateurs de contenu, c'est-à-dire de l'espérance mathématique de chacun des pixels notée ici : $z_{m,n}^{wapp}$ et, à l'inverse, en utilisant les coefficients de hautes fréquences, ou de détails, comme estimateurs du bruit notés ici $z_{m,n}^{w\det}$ . Les auteurs de [Foi2008] suggèrent de réaliser une étape de segmentation préalable afin de n'appliquer cette opération que dans les zones d'intensité approximativement constante de l'image. Cette opération préalable permet d'estimer l'espérance mathématique et la variance des pixels par zone.

La quatrième étape montrée à la case K22 concerne l'estimation de la variance des pixels par niveaux d'intensité estimée du contenu.

À partir de la « sous-image » du contenu $z_{m,n}^{wapp}$, on construit, à la case K20, L vecteurs $z_i^{wapp}$, $1 \leq l \leq L$ contenant des pixels dont les espérances estimées sont proches. Chacun des vecteurs $z_l^{wapp}$ contient $v_1$ pixels:

$z_l^{wapp} = z_{l,i}^{wapp}$ , $1 \leq i \leq v_l$. Il est montré dans [Foi2008] que chacun des vecteurs $z_l^{wapp}$ suit la loi de distribution suivante :

$$z_l^{wapp} \sim N(y_i 1, |\phi|_2^2 \sigma_l^2 I_{v_i})$$

où l est un vecteur constitué de 1 (de la dimension $v_1$ x 1) $I_{vi}$ est la matrice identité de taille $V_1$ G $V_1$ et $|\phi|_2^2$ est la norme de la fonction d'échelle de l'ondelette utilisée. Par ailleurs, compte tenu de la relation (3), la variance $\sigma_l^2$ est donnée par :

$$\sigma_l^2 = a y_i + b$$

L'estimateur du maximum de l'espérance est donné par:

$$\hat{y}_{l=} \frac{1}{v_l} \sum z_{l,i}$$

et est statistiquement distribué suivant la loi Gaussienne suivante :

$$\hat{y}_l \sim N\left( y_l, \frac{|\phi|_2^2}{v_l} \sigma_l^2 \right) \tag{4}$$

Enfin, en utilisant la relation (3), l'estimation de la variance des pixels du vecteur $z_l^{wapp}$ est donnée par

$$\hat{\sigma}_l^2 = a \hat{y}_l + b \tag{5}$$

lorsque les paramètres a et b de(s) appareil(s) photographiques sont connus.

Lorsque les paramètres a et b ne sont pas connus et obtenus par le maximum de vraisemblance, la variance est caractérisée par l'équation (4) :

$$\hat{\sigma}_l^2 = \frac{1}{|\phi|_2^2 (V_l - 1)} \sum_{i=1}^{v_i} \left( z_{l,i}^{wapp} - y_l \right)^2 \tag{6}$$

Suivant la méthode proposée dans [Foi2008], l'estimation de la variance est réalisée en tenant compte du phénomène de quantification des pixels permettant que la valeur de ces derniers soit un entier positif ou nul. Ce phénomène n'étant pas nécessairement pris en compte, les détails techniques sont laissés dans [Foi2008].

A la cinquième étape, montrée à la case K24, on élabore l'estimation des paramètres a et b caractérisant la relation affine entre la moyenne des pixels et la variance du bruit.

À partir de l'estimation de la variance des pixels de même niveau d'intensité et à partir de la relation entre espérance et variance des pixels (3), il est possible de fournir des estimations $\hat{a}$ et $\hat{b}$ des paramètres a et b. Cette estimation statistique est réalisée par maximum de vraisemblance en tenant compte du phénomène de quantification. Il est important de préciser que cette étape n'est pas nécessaire à l'exécution du test statistique visant à décider si une photographique numérique donné provient d'un premier appareil photographique ou d'un deuxième appareil photographique.

Enfin, le test statistique est exécuté en fonction de la probabilité d'erreur exigée et une décision est prise (voir case K26) À ce niveau, plusieurs cas peuvent être envisagés. Ils sont listés ci-dessous et accompagnés d'une description de leur mise en oeuvre :

Dans le premier cas, l'utilisateur souhaite décider si la photographie numérique inspectée provient du premier appareil photographique (encore appelé « appareil 1 » dans la suite de ce texte) ou du deuxième appareil photographique (encore appelé « appareil 2 » dans la suite de ce texte) dont les propriétés du bruit sont connues pour chacun des appareils (les coefficients notés a1, b1, a2 et b2). Dans ce cas, on procède à un test du rapport de vraisemblance dont la fonction de décision est donnée par :

$$\text{Appareil n}^\circ 1 \text{ si } \Lambda_1(Z) = \sum_{l=1}^{L} \Lambda_l\left(z_l^{wapp}\right) < \tau_{\alpha 0}$$

$$\text{Appareil n}^\circ 2 \text{ si } \Lambda_1(Z) = \sum_{l=1}^{L} \Lambda_l\left(z_l^{wapp}\right) \geq \tau_{\alpha 0} \tag{7}$$

où le seuil de décision est défini a priori selon l'équation (10) de sorte que la probabilité d'erreur exigée soit garantie asymptotiquement (lorsque le nombre de pixels est très élevé). Après quelques calculs, le logarithme du rapport de vraisemblance $\Lambda_l(z_i)$ est donné par

$$\Lambda_l(z_i) = v_i \log\left(\frac{\hat{\sigma}_{l,1}}{\hat{\sigma}_{l,2}}\right) + \frac{\hat{\sigma}_{l,2}^2 - \hat{\sigma}_{l,1}^2}{2\hat{\sigma}_{l,2}^2 \hat{\sigma}_{l,1}^2} \sum_{l=1}^{v_i} \left(z_{l,i}^{wapp} - \hat{y}_l\right)^2 \tag{8}$$

où $\hat{\sigma}_{l,i}^2$ est l'estimation de la variance donnée par l'équation (5) en utilisant les paramètres a1 et b1 de l'appareil photographique 1 (respectivement, $\hat{\sigma}_{l,2}^2$ pour l'appareil photographique 2). Quelques calculs permettent de montrer que les deux premiers moments (espérance mathématique et variance) du rapport de vraisemblance $\Lambda_l\left(z_l^{wapp}\right)$ sont donnés, dans le cas où l'appareil photographiques n°1 est utilisé, par:

$$\mathrm{E}_1\left[\log \Lambda_1\left(z_l^{wapp}\right)\right] = \frac{v_l}{2} g(y_l) + v_l h(y_l)$$

$$\mathrm{Var}_l\left[\log \Lambda_l(z_l^{wapp})\right] = \frac{v_l^2}{4} \mathrm{Var}_0\left[g(\hat{y}_l)\right] + v_l^2 \, \mathrm{Var}_0\left[h(\hat{y}_l)\right]$$

$$+ 2v_l\left(\mathrm{Var}_0\left[\ddot{h}(\hat{y}_l)\right] + \left(h(y_l)\right)^2\right)$$

où les fonctions g(x), h(x) et q(x) sont données par:

$$g(x) = \log\frac{a_1 x + b_1}{a_2 x + b_2}$$

$$h(x) = \frac{1 - \dfrac{a_1 x + b_2}{a_1 x + b_2}}{2}$$

$$q(x) = \frac{\dfrac{a_2 x + b_2}{a_1 x + b_1} - 1}{2}$$

Dans le cas où l'appareil n°2 est utilisé, les mêmes calculs permettent de montrer que les deux premiers moments du rapport de vraisemblance $\Lambda_l(z_l^{wapp})$ sont donnés,

$$E_2\left[\log \Lambda_1\left(z_l^{wapp}\right)\right] = \frac{v_l}{2}g(y_l) + v_l q(y_l)$$

$$Var_2\left[\log \Lambda_l(z_l^{wapp})\right] = \frac{v_l^2}{4}Var_1\left[g(\hat{y}_l)\right] + v_l^2 \, Var_1\left[q(\hat{y}_l)\right] + 2v_l\left(Var1\left[q(\hat{y}_l)\right] + \left(q(y_l)\right)^2\right)$$

En définissant les deux équations ci-dessus, les deux premiers moments du rapport de vraisemblance $\Lambda_l(Z)$ sont donnés, dans le cas où l'appareil photographique j = {1,2} est utilisé, par :

$$m_j = E_j\left[\log \Lambda_l(z_l^{wapp})\right] = \sum_{l=1}^{L} E_j\left[\log \Lambda_l(z_l^{wapp})\right]$$

$$s_j^2 = Var_j\left[\log \Lambda_1\left(z_l^{wapp}\right)\right] = \sum Var_j\left[\log \Lambda_1\left(z_l^{wapp}\right)\right] \tag{9}$$

En prenant le théorème de la limite centrale de Lindeberg [Lehmann2005, Théorème 11.2.5], les propriétés des variables aléatoires Gaussiennes permettent d'obtenir la valeur du seuil de décision suivante :

$$\tau_{\alpha 0} = s_l \Phi^{-1}(1 - \alpha 0) + m_0 \tag{10}$$

où $\Phi^{-1}$ est la réciproque de la fonction de répartition Gaussienne centrée réduite qui permet de garantir que asymptotiquement (lorsque le nombre total de pixels MN $\to \infty$) la probabilité d'erreur de première espèce du test (7) vérifie $\alpha_0(\delta_1(Z)) \le \alpha_0$.

L'erreur de première espèce est caractérisée par la prise de décision « Appareil n°2 » lorsque l'image inspectée provient de l'appareil n°1. Néanmoins en intervertissant le rôle des appareils photographiques, il est possible de garantir la probabilité de l'erreur de seconde espèce (réciproquement décider « Appareil n°1 » lorsque l'image inspectée provient de l'appareil n°2).

La puissance du test est définie comme la probabilité que le test prenne la décision « Appareil n°2 » lorsque l'image inspectée provient effectivement de l'appareil n°2. En utilisant le théorème de la limite centrale de Lindeberg [Lehman2005, Théorème 11.2.5], les propriétés des variables aléatoires Gaussiennes permettent d'obtenir la puissance du test proposé :

$$\beta = 1 - \Phi\left(\frac{s_0}{s_1}\Phi^{-1}(1 - \alpha_0) - \frac{m_1 - m_0}{s_1}\right) \tag{11}$$

Dans ce second cas, l'utilisateur souhaite décider si la photographie numérique inspectée peut provenir d'un appareil photographique n°1 dont les propriétés du bruit sont connues (les paramètres notés $a_1$ et $b_1$). Les paramètres a* et b* de l'appareil photographique potentiellement à l'origine de la photographie ne sont pas connus. Cependant, on suppose dans la suite que ces derniers vérifient a1 < a* et b1 < b* ou bien a1 > a* et b1 > b*.

On procède alors à un test, basé sur le rapport de vraisemblance précédent, dont la fonction de décision est

donnée par

$$\begin{cases} Appareil\ 1 \quad si \quad \Lambda_2(Z) = \sum \Lambda_2\left(z_l^{wap}\right) \in \left]\tau_{\alpha 0}^{\min}, \tau_{\alpha 0}^{\max}\right[ \\ sinon \qquad\qquad\qquad appareil\ différent \end{cases} \qquad (12)$$

où le seuil de décision est défini a priori par l'équation (12) de sorte que la probabilité d'erreur exigée soit garantie asymptotiquement (lorsque le nombre de pixels est très élevé) et où, après quelques calculs, le logarithme du rapport de vraisemblance $\Lambda_2(z_l)$ est donné par:

$$\Lambda_2\left(z_l^{wapp}\right) = \sum_{i=1}^{v_l} \frac{\left(z_{l,i}^{wapp} - \hat{y}_l\right)^2}{\hat{\sigma}_l^2}$$

$$(13)$$

où $\hat{\sigma}_l^2$ est l'estimation de la variance donnée par l'équation (5) en utilisant les paramètres a1 et b1 de l'appareil photographique n°1 (seul appareil considéré comme étant connu dans ce second cas).

En utilisant les propriétés de la loi Gaussienne centrée réduite, la quantité $\Lambda_2\left(z_l^{wapp}\right)$ est distribuée, lorsque l'appareil n°1 est à l'origine de la photographie inspectée, suivant la loi de distribution suivante :

$$\Lambda_2\left(z_l^{wapp}\right) \sim \chi_{v_L}^2$$

où $\chi_{v_l}^2$ représente la loi de distribution du $\chi^2$ (« chi2 ») à $v_l$ degrés de liberté. Ainsi, il en découle que la quantité $\Lambda_2(Z)$ est distribuée suivant la loi de distribution suivante :

$$\Lambda_2(Z) \sim \chi_{MN}^2$$

Finalement, quelque soit le nombre MN de pixels, les propriétés de la loi de distribution du $\chi^2$ permettent d'établir que les seuils de décision donnés par:

$$\tau_{\alpha 0}^{\min} = \left[\chi^2\right]^{-1}\left(\frac{\alpha 0}{2}\right) \ \text{et} \ \tau_{\alpha 0}^{\max} = \left[\chi^2\right]^{-1}\left(1 - \frac{\alpha 0}{2}\right) \qquad (14)$$

où $[\chi^2]^{-1}$ est la réciproque de la fonction de répartition du $\chi2$, permettent de garantir que la probabilité d'erreur de première espèce du test (12) vérifie :

$$\alpha 0\left(\delta_1(Z)\right) \leq \alpha 0$$

Enfin, la puissance du test, c'est-à-dire la probabilité de rejeter l'hypothèse que la photographie inspectée provient de l'appareil n°1 lorsque c'est effectivement le cas, dépend des paramètres a* et b* de l'appareil photographique (inconnu) à la source de lumière inspectée.

Dans ce troisième cas, le test vise à vérifier si une image bruitée a été prise par l'appareil 0 lorsque les paramètres de l'image sont inconnus. Le problème est rendu plus compliqué parce que l'hypothèse alternative devient complexe lorsque l'on tient compte de la présence de paramètres de nuisance. Pour surmonter cette sorte de problème le test RVG (Rapport de Vraisemblance Généralisé) est utilisé.

On réécrit les deux hypothèses alternatives H0 et H1 pour une observation. Selon l'hypothèse H0 l'image provident de l'hypothèse n°1 et sous l'hypothèse H1, l'image provient de l'appareil n°2.

$$\begin{cases} \mathcal{H}_0 \; : \; z_i \sim \mathrm{P}_{yi,a0,b0} = \mathcal{N}\left(y_i, \sigma_{i,0}^2\right) \\ \mathcal{H}_1 \; : \; z_i \sim \mathrm{P}_{yi,a,b} = \mathcal{N}\left(y_i, \sigma_i^2\right) \quad (a,b) \neq (a_0, b_0) \end{cases}$$

Dans cette équation :

$$\sigma_{i,0}^2 = a_0 \, y_i + b_0 \qquad \sigma_i^2 = a \, y_i + b$$

Les paramètres (a,b) et $y_i$ sont inconnus. En utilisant leur EMV (Estimateur du Maximum de Vraisemblance), le test RVG devient :

$$\delta_3 = \begin{cases} \mathrm{H}_0 & \text{if } \hat{\Lambda}_3(Z) = \prod_{i=1}^{M} \hat{\Lambda}_3(z_i) < \tau_{a0} \\ \mathrm{H}_1 & \text{if } \hat{\Lambda}_3(Z) = \prod_{i=1}^{M} \hat{\Lambda}_3(z_i) \geq \tau_{a0} \end{cases}$$

où RVG $\hat{\Lambda}_3(\mathbf{z}_i)$ est donné par :

$$\hat{\Lambda}_3(z_i) = \frac{\sup_{a,b} \; \sup_{yi,a,b} \; P_{yi,a,b}}{\sup_{yi} \; P_{yi,a0,b0}} = \frac{P_{yi,\hat{a},\hat{b}}}{P_{yi,a0,b0}}$$

Il est particulièrement important de calculer d'une manière analytique les performances statistiques du RVG afin de garantir une probabilité d'erreur prescrite.

**Estimation des paramètres de l'image.**

L'algorithme d'estimation est clairement indiqué dans le document [Foi2008]. Cette étape, montrée à la case K22, a été brièvement décrite au paragraphe [0032] et est ici présentée plus en détails. Tout d'abord l'image bruitée est traitée dans le domaine des « ondelettes » en vue de faciliter l'analyse du bruit. Elle est ensuite segmentée en K ensembles de niveaux sans chevauchements ; les données sont donc « adoucies ». Il est considéré d'une manière raisonnable que chaque ensemble de même niveau d'intensité forme une région uniforme. Par conséquent, les pixels de chaque ensemble de même niveau partagent la même moyenne et la même variance, les pixels sont statistiquement indépendants et identiquement distribués.
Soit :

$$z_l^{wapp} = \left\{ z_{l,i}^{wapp} \right\}_{i=1}^{v_l}$$

le vecteur des coefficients d'approximation de l'ondelette représentant l'ensemble de niveau k qui contient nk pixels. Ces coefficients sont distribués comme suit :

$$\begin{cases} z_k^{wapp} \sim N(y_k, \|\varphi\|_2^2 \, \sigma_{k,0}^2), \, dans \; le \; cas \; H0 \\ z_k^{wapp} \sim N(y_k, \|\varphi\|_2^2 \, \sigma_k^2), \, dans \; le \; cas \; H1 \end{cases}$$

Où $\left\|\varphi\right\|_2^2$ est la fonction d'échelle d'ondelette normalisée en 2D.

Il en découle que le EMV de l'espérance $y_k$ dans chaque ensemble de niveau k peut être défini par :

$$\hat{y}_k = \frac{1}{n_k} \sum_{i=1}^{n_k} z_{k,i}^{wapp}$$

La distribution de $\hat{y}_k$ peut donc être définie par :

$$\begin{cases} \hat{y}_k \sim N(y_k, c_k \sigma_{k,0}^2), dans\ le\ cas\ H0 \\ \hat{y}_k \sim N(y_k, c_k \sigma_k^2), dans\ le\ cas\ H1 \end{cases}$$

Où

$$c_k = \frac{\left\|\varphi\right\|_2^2}{n_k}$$

**Estimation des paramètres d'un appareil photographique**

On va présenter comment estimer les paramètres d'un appareil photographique au moyen d'une image donnée bruitée.

Soit $z_k^{w\det} = \left\{ z_{k,i}^{w\det} \right\}_{i=1}^{nk}$ le vecteur des coefficients de détail de l'ondelette représentant l'ensemble de niveau « k ». En considérant l'hypothèse $\forall k, n_k \to \infty$, sa distribution peut être déterminée par : $z_k^{w\det} \sim N(0, \sigma_k^2)$

Une estimation non biaisée de $\sigma_k^2$ est alors donnée par :

$$\sigma_k^2 = \frac{1}{nk-1} \sum_{i=1}^{nk} \left( z_k^{w\det} - \overline{z}_k^{w\det} \right)^2$$

où

$$\overline{z}_k^{w\det} = \frac{1}{nk} \sum_{i=1}^{nk} z_{k,i}^{w\det}$$

Les estimées $\hat{\sigma}_k^2$ sont distribués, à un facteur d'échelle près, suivant une loi de distribution du $X^2$ avec $n_k-1$ degrés de liberté. Cette distribution peut asymptotiquement, pour $n_k$ suffisamment grand, être approchée, avec une bonne précision, par la loi de distribution normale suivante :

$$\hat{\sigma}_k^2 \sim N\left(\sigma_k^2, e_k \sigma_k^4\right) \quad où\ e_k = \frac{2}{n_k - 1}$$

Alors la variance $\hat{\sigma}_k^2$ peut être traitée comme un modèle hétéroscédastique de l'espérance $\hat{\mu}_k$ qui peu s'écrire :

$$\hat{\sigma}_k^2 = b + a\hat{y}_k + s_k \varepsilon_k \qquad (k = 1,...,K)$$

où

$$s_k^2 = e_k (ay_k + b)^2 - a^2 c_k (ay_k + b)$$

Les résidus $\varepsilon_k$ sont indépendants et identiquement distribués comme une distribution normale standard.

L'hétéroscédasticité dans le modèle est régie par les différents $s_k^2$. Il est possible d'exploiter l'approche des moindres carrés pondérés dans le but de minimiser les résidus pondérés et de fournir un modèle convenable. Un stratégie bien connue pour estimer (a,b) est d'obtenir, dans un premier temps les estimées $\hat{s}_k^2$ et dans un deuxième temps d'appliquer les moindres carrés pondérés en utilisant une pondération telle que $\hat{w}_k = \dfrac{1}{\hat{s}_k^2}$

Les moindres carrés donnant une estimation $(\hat{a}_L, \hat{b}_L)$ utilisée comme estimation préliminaire sont définis par :

$$\begin{pmatrix} \hat{b}_L \\ \hat{a}_L \end{pmatrix} = (X^T X)^{-1} X^T V$$

où

$$X = \begin{pmatrix} 1 & \hat{y}_1 \\ \vdots & \vdots \\ 1 & \hat{y}_k \end{pmatrix} \qquad V = \begin{pmatrix} \hat{\sigma}_1^2 \\ \vdots \\ \hat{\sigma}_k^2 \end{pmatrix}$$

Il en découle que les estimations de $\hat{s}_k^2$ peuvent être directement calculées par :

$$\hat{s}_k^2 = e_k \left( \hat{a}_L \hat{y}_k + \hat{b}_L \right)^2 - \hat{a}_L^2 c_k \left( \hat{a}_L \hat{y}_k + \hat{b}_L \right)$$

En utilisant les pondérations estimées : $\hat{w}_k = \dfrac{1}{\hat{s}_k^2}$ , les estimateurs WLS peuvent être calculés par :

$$\begin{pmatrix} \hat{b}_w \\ \hat{a}_w \end{pmatrix} = \left( X^T W X \right)^{-1} X^T W V$$

où :

$$W = diag(\hat{w}_1, ..., \hat{w}_k)$$

Il est montré dans le document [Shao1989] que compte tenu de la normalité et de la forme connue de $s_k$, le WLS donne une estimation en utilisant $\hat{w}_k$ qui devient d'une manière asymptotique équivalente aux estimations EMV (maximum de vraisemblance) pour un grand échantillonnage. En outre les estimations WLS et EMV partagent la même distribution normale asymptotique.

**Variance des estimées WLS.**

Comme les estimées des moindres carrés ont la propriété d'être non biaisées, il s'en suit que: $E\left[ \hat{s}_k^2 \right] = s_k^2$

et que :

$$Var\left[\hat{s}_k^2\right] = e_k^2 Var\left[\left(\hat{a}_L\,\hat{y}_k + \hat{b}_L\right)^2\right] + c_k^2 Var\left[\hat{a}_L^2\left(\hat{a}_L\,\hat{y}_k + \hat{b}_L\right)\right]$$

$$= \sigma(n_k^2)$$

En conséquence, on peut calculer d'une manière approximative $\hat{s}_k^2$ et $\hat{w}_k$ par :

$$\hat{s}_k^2 \approx s_k^2$$

$$\hat{w} \approx w_k$$

On peut réécrire les estimées WLS :

$$\hat{a}_w = \frac{A_1}{A_2}$$

$$\hat{b}_w = \bar{\sigma}^2 - \hat{a}_w \bar{y}$$

où :

$$A_1 = \sum_{k=1}^{K} w_k \left(\hat{y}_k - \bar{y}\right)\hat{\sigma}_k^2$$

et

$$A_2 = \sum_{k=1}^{K} w_k \left(\hat{y}_k - \bar{y}\right)^2$$

$$\bar{y} = \frac{\sum_{k=1}^{K} w_k \hat{y}_k}{w_k} \qquad \bar{\sigma}^2 = \frac{\sum_{k=1}^{K} w_k \hat{\sigma}_k^2}{\sum_{k=1}^{K} w_k}$$

On peut observer que $\bar{y}$ et $\bar{\sigma}^2$ se présentent sous forme de distributions gaussiennes ayant respectivement les espérances et les variances :

$$\mathbb{E}\left(\overline{y}\right) = y = \frac{\sum_{k=1}^{K} w_k y_k}{\sum_{k=1}^{K} w_k} \qquad\qquad Var\left(\overline{y}\right) = \frac{\sum_{k=1}^{K} w_k^2 c_k \sigma_k^2}{\left(\sum_{k=1}^{K} w_k\right)^2}$$

$$\mathbb{E}\left(\overline{\sigma}^2\right) = \sigma^2 = \frac{\sum_{k=1}^{K} w_k \sigma_k^2}{\sum_{k=1}^{K} w_k} = ay + b \qquad\qquad Var\left(\overline{\sigma}^2\right) = \frac{\sum_{k=1}^{K} w_k^2 e_k \sigma_k^4}{\left(\sum_{k=1}^{K} w_k\right)^2}$$

En application de la méthode du Delta [Lehmann2005, Théorème 11.2.14], il découle que pour deux variables aléatoires X et Y indépendantes, si on définit respectivement, $m_x$, $s_x^2$ et $m_y$, $s_y^2$, l'espérance et la variance des variables aléatoires X et Y , alors on a une approximation du rapport $R = \dfrac{X}{Y}$ selon les relations ci-dessous :

$$\mathrm{E}\left[R\right] = \frac{m_x}{m_y} \qquad\qquad Var\left[R\right] = \frac{m_x^2}{m_y^2}\left(\frac{s_x^2}{m_x^2} + \frac{s_y^2}{m_y^2}\right)$$

Il découle également de la méthode du Delta [Lehmann2005, Théorème 11.2.14], que l'espérance et la variance de la variable aléatoire $S = \log\dfrac{X}{Y}$ peuvent être calculées d'une manière approximative par :

$$\mathrm{E}\left[S\right] = \log\frac{m_x}{m_y}$$

$$Var\left[S\right] = \frac{s_x^2}{m_x^2} + \frac{s_y^2}{m_y^2}$$

En considérant l'équation (4) il s'en suit :

$$\hat{y}_k - y \sim \mathcal{N}\left(y_k - y, c_k \sigma_k^2 + Var\left(\overline{y}\right)\right)$$

dont il découle finalement :

$$\mathbb{E}\left[w_k\left(\hat{y}_k - \overline{y}\right)\sigma_k^2\right] = w_k\left(y_k - y\right)\sigma_k^2$$

$$Var\left[ w_k \left( \hat{y}_k - \bar{y} \right) \hat{\sigma}_k^2 \right] = w_k^2 \sigma_k^4 \left[ e_k \left( y_k - y \right)^2 + c_k \sigma_k^2 + Var\left( \bar{y} \right) + o\left( n_k^2 \right) \right]$$

En tenant compte du théorème de la limite centrale de Linderberg [Lehmann2005, Théorème 11.2.5] : $A_1$ est une valeur de type gaussien présentant une espérance et une variance :

$$\mathbb{E}\left( A_1 \right) = \sum_{k=1}^{K} w_k \left( y_k - y \right) \sigma_k^2$$

$$Var\left( A_1 \right) = \sum_{k=1}^{K} w_k^2 \sigma_k^4 \left[ e_k \left( y_k - y \right)^2 + c_k \sigma_k^2 + Var\left( \bar{y} \right) \right]$$

On peut alors écrire :

$$\mathbb{E}\left( w_k \left( \hat{y}_k - \bar{y} \right)^2 \right) = w_k \left( y_k - y \right)^2$$

$$Var\left( w_k \left( \hat{y}_k - \bar{y} \right)^2 \right) = 4 w_k^2 \left( y_k - y \right)^2 \left( c_k \sigma_k^2 + Var\left( \bar{y} \right) + o\left( n_k^2 \right) \right)$$

En conséquence, et compte tenu du théorème de la limite centrale de Lindeberg [Lehmann2005, Théorème 11.2.5], $A_2$ se présente sous la forme d'une distribution gaussienne ayant une espérance et une variance telles que :

$$\mathbb{E}\left( A_2 \right) = \sum_{k=1}^{K} w_k \left( y_k - y \right)^2$$

$$Var\left( A_2 \right) = 4 \sum_{k=1}^{K} w_k^2 \left( y_k - y \right)^2 \left( c_k \sigma_k^2 + Var\left( \bar{y} \right) \right)$$

De la méthode du Delta, il en découle :

$$Var\left[ \hat{a}_w \right] = \frac{Var\left[ A_1 \right] + a^2 Var\left[ A_2 \right]}{\mathbb{E}^2 \left[ A_2 \right]}$$

$$Var\left[ \hat{b}_w \right] = Var\left( \hat{\sigma}^2 \right) + a^2 Var\left( \bar{y} \right) + y^2 Var\left[ \hat{a}_w \right]$$

En outre la covariance entre les deux estimées peut se définir par :

$$Cov\left[ \hat{a}_w, \hat{b}_w \right] = Cov\left[ \hat{a}_w, \hat{\sigma}^2 - \hat{a}_w \bar{y} \right] = -y\, Var\left[ \hat{a}_w \right]$$

**Performance statistique du test.**

Le test RVG (Rapport de Vraisemblance Généralisé) peut être réécrit sous la forme :

$$\delta_3 = \begin{cases} H_0 & \text{if } \hat{\Lambda}_3(Z) = \prod_{k=1}^{K} \prod_{i=1}^{n_k} \hat{\Lambda}_3\left(z_{k,i}^{wapp}\right) < \tau_{a0} \\[2em] H_1 & \text{if } \hat{\Lambda}_3(Z) = \prod_{k=1}^{K} \prod_{i=1}^{n_k} \hat{\Lambda}_3\left(z_{k,i}^{wapp}\right) \geq \tau_{a0} \end{cases}$$

où $\tau_{a0}$ est la solution de l'équation :

$$P_0\left[\hat{\Lambda}_3(Z) \geq \tau_{a0}\right] = a_0.$$

Le test RVG $\hat{\Lambda}_3\left(z_{k,i}^{wapp}\right)$ est donné par :

$$\hat{\Lambda}_3\left(z_{k,i}^{wapp}\right) = \frac{\bar{\sigma}_{k,0}}{\bar{\sigma}_k} \cdot \exp\left[\frac{\bar{\sigma}_k^2 - \bar{\sigma}_{k,0}^2}{2\|\varphi\|_2^2 \, \bar{\sigma}_k^2 \, \bar{\sigma}_{k,0}^2}\left(z_{k,i}^{wapp} - \hat{y}_k\right)^2\right]$$

où

$$\bar{\sigma}_{k,0}^2 = a_0 \hat{y}_k + b_0 \quad \text{et} \quad \bar{\sigma}_k^2 = \hat{a}_w \hat{y}_k + \hat{b}_w$$

La variance de $\bar{\sigma}_{k,0}^2$ peut être donnée par :

$$\begin{cases} Var_0\left[\bar{\sigma}_k^2\right] = a^2 c_k \sigma_{k,0}^2 + y_k^2 \, Var\left[\hat{a}_w\right] + 2y_k \, Cov\left[\hat{a}_w, \hat{b}_w\right] + Var\left[\hat{b}_w\right] \\[1em] Var_1\left[\bar{\sigma}_k^2\right] = a^2 c_k \sigma_k^2 + y_k^2 \, Var\left[\hat{a}_w\right] + 2y_k \, Cov\left[\hat{a}_w, \hat{b}_w\right] + Var\left[\hat{b}_w\right] \end{cases}$$

Sur la base des logarithmes, la fonction de vraisemblance en logarithme se calcule directement :

$$\log \hat{\Lambda}_3\left(z_{k,i}^{wapp}\right) = \log \frac{\bar{\sigma}_{k,0}}{\bar{\sigma}_k} + \frac{\bar{\sigma}_k^2 - \bar{\sigma}_{k,0}^2}{2\|\varphi\|_2^2 \, \bar{\sigma}_k^2 \, \bar{\sigma}_{k,0}^2}\left(z_{k,i}^{wapp} - \hat{y}_k\right)^2$$

$$= \frac{T}{2} + \frac{1-Z}{2} \frac{\left(z_{k,i}^{wapp} - \hat{y}_k\right)^2}{\|\varphi\|_2^2 \, \bar{\sigma}_{k,0}^2}$$

où

$$Z = \frac{\tilde{\sigma}_{k,0}^2}{\tilde{\sigma}_k^2}$$

et

$$T = \log \frac{\tilde{\sigma}_{k,0}^2}{\tilde{\sigma}_k^2}$$

En conséquence, les deux premiers moments de $\log \hat{\Lambda}_3 \left( z_{k,i}^{wapp} \right)$ sous l'hypothèse $H_0$, selon laquelle l'image provient de l'appareil n°1, sont donnés par:

$$\mathrm{E}_0 \left[ \log \hat{\Lambda}_3 \left( z_{k,i}^{wapp} \right) \right] = \frac{\mathrm{E}_0 \left[ T \right]}{2} + \frac{1 - \mathrm{E}_0 \left[ Z \right]}{2}$$

$$Var_0 \left[ \log \hat{\Lambda}_3 \left( z_{k,i}^{wapp} \right) \right] = \frac{Var_0 \left[ T \right] + 3\, Var_0 \left[ Z \right]}{4} + \frac{\left( 1 - \mathrm{E}_0 \left[ Z \right] \right)^2}{2}$$

On peut aussi écrire la vraisemblance en logarithme de $\hat{\Lambda}_3 \left( z_{k,i}^{wapp} \right)$

$$\log \hat{\Lambda}_3 \left( z_{k,i}^{wapp} \right) = \log \frac{\bar{\sigma}_{k,0}}{\bar{\sigma}_{k,1}} + \frac{\bar{\sigma}_{k,1}^2 - \bar{\sigma}_{k,0}^2}{2 \|\varphi\|_2^2\, \bar{\sigma}_{k,1}^2\, \bar{\sigma}_{k,0}^2} \left( z_{k,i}^{wapp} - \hat{y}_k \right)^2$$

$$= \frac{T}{2} + \frac{Q-1}{2} \frac{\left( z_{k,i}^{wapp} - \hat{y}_k \right)^2}{\|\varphi\|_2^2\, \bar{\sigma}_k^2}$$

où

$$Q = \frac{\tilde{\sigma}_{k,1}^2}{\tilde{\sigma}0} .$$

Les deux premiers moments de $\log \hat{\Lambda}_3 \left( z_{k,i}^{wapp} \right)$ sous l'hypothèse $H_1$, selon laquelle l'image provient de l'appareil n°2, sont donnés par les formules suivantes :

$$\mathrm{E}_1 \left[ \log \hat{\Lambda}_3 \left( z_{k,i}^{wapp} \right) \right] = \frac{\mathrm{E}_1 \left[ T \right]}{2} + \frac{\mathrm{E}_1 \left[ Q \right] - 1}{2}$$

$$Var_1\left[\log \hat{\Lambda}_3\left(z_{k,i}^{wapp}\right)\right] = \frac{Var_1 + 3\,Var_1\left[Q\right]}{4} + \frac{\left(\mathrm{E}_0\left[Q\right]-1\right)^2}{2}$$

Enfin, il est possible d'envisager un quatrième cas d'utilisation du système d'identification d'un appareil photographique en vue de déterminer, de façon supervisée, si une zone de l'image n'a pas été falsifiée (par copier/coller depuis une autre photographie ou par suppression d'une élément). On entend ici par " supervisé le fait que l'utilisateur souhaite s'assurer de l'intégrité d'une zone préalablement définie. Le principe est alors d'appliquer la méthode d'identification aux deux " sous-images " issues respectivement de la zone ciblée par l'utilisateur et de son complémentaire (le reste de l'image). Si l'élément inspecté provient d'une autre photographie et a été ajouté par copier/coller, les propriétés de bruit seront différentes de ce que le système proposé sera capable d'identifier (en supposant que les photographies n'ont pas été prises avec dans les mêmes conditions d'acquisition et avec le même modèle d'appareil photographique, ce qui semble raisonnable).

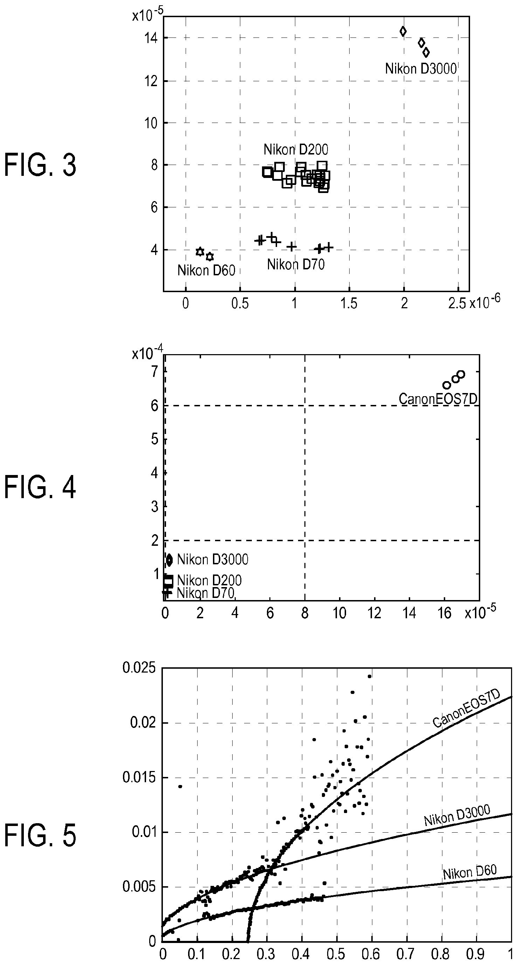

Les figures 3 et 4 présentent une série des paramètres caractérisant les propriétés d'hétéroscédasticité du bruit de quelques modèles d'appareils ; ces résultats sont obtenus avec la méthode proposée dans [Foi2008] et illustrent la différentiation des modèles d'appareils photographiques.

La figure 5 illustre la comparaison des propriétés du bruit entre les trois appareils photographiques suivants : Canon EOS7D, Nikon D60 et Nikon D3000. Elle présente la variance du bruit d'acquisition (entre 0 et 0,0025) en fonction de l'espérance mathématique de la valeur des pixels (entre 0 et 1), voir relations (3) et (5). On constate que les trois modèles d'appareils photographiques distincts pour lesquels les paramètres a et b, caractérisant cette relation, ont été estimés présentent des propriétés d'hétéroscédasticité fort différentes. Cette figure permet de visualiser la différence qui existe entre les propriétés des bruits présents dans des images capturées par des modèles d'appareils photographiques distincts.

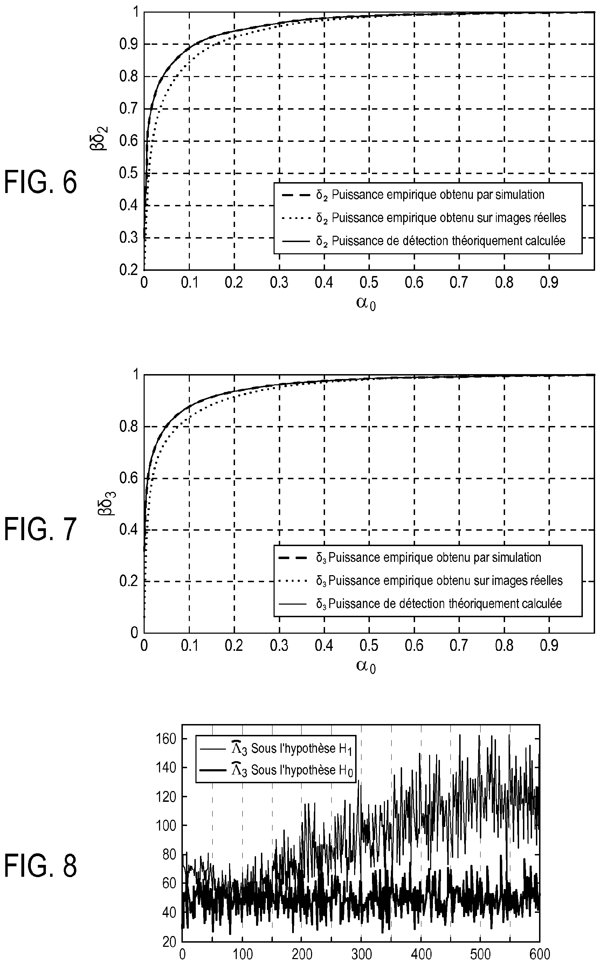

La figure 6, montre les performances du système d'identification dans le second cas, décrit précédemment, dans lequel seul un modèle d'appareil photographique potentiel est connu et l'on souhaite tester si la photographie provient d'un autre appareil quel qu'il soit. Cette figure offre une comparaison entre la puissance de détection théoriquement calculée (traits pleins) et celle obtenue lors de simulations empiriques (traits pointillés fins et moyens).

La figure 7 montre les performances du système d'identification dans le troisième cas, décrit précédemment, dans lequel aucun des appareils photographique n'est connu ce qui nécessite d'estimer les paramètres permettant l'identification. Ces performances offrent une comparaison entre la puissance théoriquement calculée (traits pleins) et la puissance empirique obtenue sur des images réelles (traits pointillés fins), et la puissance empirique obtenue par simulation.

Les résultats présentés dans les figures 6 et 7 ont été obtenus à partir d'une base d'images naturelles provenant de deux modèles d'appareil photographique distincts. Les paramètres de bruit, $a_1$, $b_1$ et $a_2$, $b_2$ de chaque appareil ont été calculés sur l'ensemble des images de cette base de données (les appareils utilisées sont les NikonD60 et NikonD3000 présentés sur la figure 5. On constate enfin dans les figures 6 et 7 que, outre la puissance de détection (axe des ordonnés) très importante il est possible d'obtenir pour une probabilité de fausse-alarme très faible (axe des abscisses). De plus, les résultats théoriques et empiriques sont en très bonne adéquation.

La figure 8 montre les résultats obtenus dans le cas où l'appareil photographique 2 est inconnu. Le résultat est simulé avec l'intensité « y » croissante de la gauche vers la droite, image d'une mire constituée de bandes grises allant du noir au blanc, photographiée avec deux modèles d'appareil photographique distincts. Il a été considéré que les propriétés de l'un des deux appareils photographique sont connues Ce modèle d'appareil photographique a été utilisé pour obtenir les résultats présentés dans la figure 6. La figure 7 présente en abscisse le numéro de ligne inspecté et en ordonné la valeur du rapport de vraisemblance calculé sans connaissance sur les propriétés de l'appareil photographique n°2. Ladite figure montre que 1) à un facteur d'échelle près, le rapport de vraisemblance est normalisé de sorte que sa distribution reste identique pour l'appareil photographique n°1 et, 2) que pour l'appareil photographique n°2, le rapport de vraisemblance, sur lequel est fondé le système d'identification proposé, prend des valeurs largement supérieures ce qui permet une prise de décision.

La méthode d'identification du modèle d'appareil photographique proposée répond aux deux inconvénients et faiblesses des méthodes brièvement présentées dans l'état de l'art. Premièrement, dans les méthodes de l'état de l'art, les performances ne sont pas établies et de plus ces méthodes peuvent être mises en échec par la calibration de l'appareil photographique. La méthode proposée selon l'invention repose sur la propriété d'hétéroscédasticité du bruit, caractéristique inhérente à l'acquisition des photographies. Cette dernière est applicable de façon générale quels que soient les traitements post-acquisition appliqués par un utilisateur (notamment en vue d'améliorer la qualité visuelle). En outre la modélisation paramétrique de la relation entre moyenne et variance de la valeur des pixels permet de fournir de façon analytique les performances du test proposé. Cet avantage permet notamment d'assurer le respect d'une contrainte prescrite sur la probabilité d'erreur.

Les principaux domaines d'applications de l'invention sont d'une part, la recherche de preuve à partir d'une image « compromettante » et d'autre part la garantie qu'une photographie a été acquise par un appareil donné.

La méthode proposée peut être étendue au contrôle de l'intégrité d'une photographie. Le but est alors de garantir qu'une photographie n'a pas été modifiée/falsifiée depuis son acquisition. Cela permet par exemple de détecter les photographies comportant des éléments provenant d'un appareil photographique différent, i.e. importés après l'acquisition, ou encore d'assurer l'intégrité d'un document scanné ou photographié (un document juridique par exemple).

Le procédé de l'invention pourra être développé dans des logiciels spécialisés, dans la recherche de preuve à partir de média numériques. Le procédé selon l'invention peut être utilisé auprès des tribunaux comme un outil d'aide à la décision.

**Bibliographie:**

**[Shao1989]** "Asymptotic distribution of the weighted least squares estimator", Shao, J., Annals of the Institute of Statistical Mathematics, vol.41, no.2, pp 365-382, 1989.

**[Healey1994]** "Radiometric CCD camera calibration and noise estimation", Healey, G.E.; Kondepudy, R, IEEE Transaction on Pattern Analysis and Machine Intelligence, vol.16 , no.3, pp 267-276, 1994

**[Lehmann2005]** "Testing Statistical Hypotheses", Lehmann, E.L. ; Romano, J.P. , 3ième édition, ISBN 0-387-98864-5, Spinger, 2005.

**[Lukas2006]** "Digital camera identification from sensor pattern noise", Lukas, J.; Fridrich, J.; Goljan, M.; Information Forensics and Security, IEEE Transactions on , vol.1, no.2, pp. 205- 214, June 2006

**[Chen2008]** "Determining Image Origin and Integrity Using Sensor Noise", Chen, M.; Fridrich, J.; Goljan, M.; Lukas, J.; Information Forensics and Security, IEEE Transactions on, vol.3, no.1, pp.74-90, March 2008

**[Foi2008]** "Practical Poissonian-Gaussian Noise Modeling and Fitting for Single-Image Raw-Data", Foi, A.; Trimeche, M.; Katkovnik, V.; Egiazarian, K.; IEEE Transactions on Image Processing, vol.17, no.10, pp.1737-1754, Oct. 2008

**[Maillard2008]** "Detection of digital processing of images through a realistic model of CCD noise", Maillard, J.-B.; Levesque, D.; Deschenes, F. International Conference on Pattern Recognition, ICPR, 8-11 Dec. 2008

**[M. Kharrazi]** "Image Steganography : Concept and Practice", M. Kharrazi, H. T. Sencar, N. Memon, Lecture Notes Series, Institute for Mathematical Sciences, National University of Singapore, 2004.

**Revendications**

1. Système pour déterminer l'identification d'un appareil photographique (2) à partir d'une photographie (3), système comportant un dispositif d'analyse de photographies (10) pour traiter ladite photographie et un dispositif de traitement (12) pour établir des statistiques sur des pixels à partir de ladite analyse, le système opérant ladite identification sur la base de paramètres « a » et « b » définissant un appareil photographique et répondant à la relation ci-dessous :

$$. \; z_{m,n} \sim N(y_{m,n}, ay_{m,n} + b)$$

où $z_{m,n}$ est représentatif de la valeur d'un pixel situé en m et n d'une photographie,
N (..) représente une distribution gaussienne
$y_{m,n}$ est l'espérance mathématique du pixel à la position m,n.

**caractérisé en ce que** la valeur de chacun des pixels peut être considérée comme la somme d'un bruit aléatoire hétéroscédastique représentant l'ensemble des erreurs de mesure et d'un contenu déterministe :

$$z_{m,n}=y_{m,n}+\xi_{m,n}$$

et **en ce qu'**il est prévu un organe de sortie (14) qui opère par comparaison statistique des propriétés du bruit de l'image dudit appareil photographique (2) avec un autre appareil photographique pour déterminer si la photographie a été prise par ledit premier appareil (2) ou ledit autre appareil.

2. Système selon la revendication 1, **caractérisé en ce que** l'organe de sortie (14) fournit une indication sur l'identification d'un appareil photographique en certifiant l'exactitude de l'identification suivant une précision préalablement définie.

3. Procédé mis en en oeuvre dans le système de la revendication 1 **caractérisé en ce qu'**il comporte les étapes suivantes :

   - lecture de la photographie en vue de déterminer les matrices descriptives (K12),
   - estimation du contenu et du bruit de l'image (K14),
   - estimation de la variance des pixels par niveaux d'intensité estimée du contenu (K22),
   - Estimation des paramètres caractérisant la relation moyenne variance du bruit (K24),
   Exécution de tests statistiques en vue de donner l'identification. (K26)

4. Procédé selon la revendication 3, **caractérisé en ce qu'**à l'étape (K26) les tests statistiques sont exécutés en fonction de la probabilité d'erreur exigée et une décision est prise.

5. Procédé selon la revendication 3 **caractérisé en ce que** le photographie est en un format non compressé ou un format compressé sans pertes.

6. Utilisation du procédé selon l'une des revendications 3 à 5 pour la détection, de façon supervisée, de la falsification d'une zone dans une image.

7. Utilisation du procédé selon l'une des revendications 3 à 5 dans la recherche de preuves à partir d'une image compromettante.

8. Application du procédé selon l'une des revendications 3 à 5 dans des logiciels spécialisés, dans la recherche de preuves à partir de média numériques.

**Patentansprüche**

1. System zum Bestimmen der Identifikation eines Fotoapparates (2) anhand eines Fotos (3), wobei das System eine Foto-Analysevorrichtung (10) zum Bearbeiten des besagten Fotos und eine Bearbeitungsvorrichtung (12) zum Erstellen von Pixelstatistiken anhand der besagten Analyse umfasst, wobei das System die besagte Identifikation auf Grundlage von Parametern "a" und "b" betreibt, welche einen Fotoapparat definieren und der nachstehenden Relation entsprechen:

$$. \ z_{m,n} \sim N(y_{m,n}, ay_{m,n} + b)$$

worin $z_{m,n}$ für den Wert eines Pixels steht, das sich an m und n eines Fotos befindet,
N (..) eine Gauß-Verteilung ausdrückt,
$y_{m,n}$ die mathematische Erwartung des Pixels an Position m,n ist,

**dadurch gekennzeichnet, dass** der Wert jedes der Pixel als die Summe eines heteroskedastischen Zufallsrauschens, welches die Gesamtheit der Messfehler ausdrückt, und eines deterministischen Inhalts betrachtet werden kann:

$$z_{m,n} = y_{m,n} + \xi_{m,n}$$

und dadurch, dass ein Ausgangsglied (14) vorgesehen ist, welches durch statistischen Vergleich der Eigenschaften des Bildrauschens des besagten Fotoapparates (2) mit einem anderen Fotoapparat arbeitet, um zu bestimmen, ob das Foto mit dem besagten ersten Apparat (2) oder dem besagten anderen Apparat aufgenommen wurde.

2. System nach Anspruch 1, **dadurch gekennzeichnet, dass** das Ausgangsglied (14) einen Hinweis auf die Identifikation eines Fotoapparats liefert, indem es die Richtigkeit der Identifikation nach einer zuvor definierten Genauigkeit bescheinigt.

3. Verfahren, welches in dem System aus Anspruch 1 eingesetzt wird, **dadurch gekennzeichnet, dass** es die folgenden Schritte umfasst:

- Einlesen des Fotos im Hinblick darauf, die beschreibenden Matrizen (K12) zu bestimmen,
- Einschätzen des Inhalts und des Bildrauschens (K14),
- Einschätzen der Varianz der Pixel pro geschätzter Intensitätsstufe des Inhalts (K22),
- Einschätzen der Parameter, welche das durchschnittliche Verhältnis der Rauschvarianz kennzeichnen (K24),
- Ausführen von statistischen Tests im Hinblick darauf, die Identifikation zu liefern (K26).

4. Verfahren nach Anspruch 3, **dadurch gekennzeichnet, dass** bei Schritt (K26) die statistischen Tests abhängig von der erwarteten Fehlerwahrscheinlichkeit ausgeführt werden und eine Entscheidung getroffen wird.

5. Verfahren nach Anspruch 3, **dadurch gekennzeichnet, dass** das Foto in einem nicht komprimierten Format oder einem verlustlos komprimierten Format ist.

6. Verwendung des Verfahrens nach einem der Ansprüche 3 bis 5 zum Nachweis, in überwachter Weise, der Fälschung eines Bereichs in dem Bild.

7. Verwendung des Verfahrens nach einem der Ansprüche 3 bis 5 in der Beweissuche anhand eines belastenden Bildes.

8. Anwendung des Verfahrens nach einem der Ansprüche 3 bis 5 in spezialisierter Software, in der Beweissuche anhand von digitalen Medien.

**Claims**

1. System for determining the identification of a camera (2) from a photograph (3), said system comprising a device for analysing photographs (10) for processing said photograph and a processing device (12) for establishing statistics on pixels on the basis of said analysis, the system performing said identification on the basis of parameters "a" and "b" defining a camera and complying with the relationship below:

$$z_{m,n} \sim N(y_{m,n}, a y_{m,n} + b)$$

where $z_{m,n}$ is representative of the value of a pixel situated at m and n of a photograph,
N (..) represents a Gaussian distribution
$y_{m,n}$ is the expected value of the pixel at the position m,n.

**characterised in that** the value of each of the pixels can be considered to be the sum of a random heteroscedastic noise representing the set of measurement errors and a deterministic content:

$$z_{m,n} = y_{m,n} + \xi_{m,n}$$

and **in that** an output device (14) is provided which operates by statistical comparison of the properties of the noise of the image of said camera (2) with another camera to determine whether the photograph was taken by said first camera (2) or said other camera.

2. System according to claim 1, **characterised in that** the output device (14) provides an indication on the identification of a camera by certifying the accuracy of the identification according to a previously defined precision.

3. Method implemented in the system according to claim 1 **characterised in that** it comprises the following steps:

   - reading of the photograph with a view to determining the descriptive matrices (K12),
   - estimation of the content and the noise of the image (K14),
   - estimation of the variance of the pixels by levels of estimated intensity of the content (K22),
   - Estimation of the parameters characterising the mean variance relationship of the noise (K24),

   Execution of statistical tests with a view to providing the identification. (K26)

4. Method according to claim 3, **characterised in that**, at the step (K26), the statistical tests are executed according to the required probability of error and a decision is made.

5. Method according to claim 3 **characterised in that** the photograph is in a non-compressed format or a lossless compressed format.

6. Use of the method according to any one of claims 3 to 5 for the supervised detection of the falsification of an area in an image.

7. Use of the method according to any one of claims 3 to 5 in searching for evidence using an incriminating image.

8. Application of the method according to any one of claims 3 to 5 in specialised software, in searching for evidence using digital media.

FIG.1

EP 2 825 995 B1

K10

K12

K14

K16

K18

K20

K22

K24

K26

FIG.2

FIG. 3

FIG. 4

FIG. 5

FIG. 6

- - - δ₂ Puissance empirique obtenu par simulation
...... δ₂ Puissance empirique obtenu sur images réelles
—— δ₂ Puissance de détection théoriquement calculée

FIG. 7

- - - δ₃ Puissance empirique obtenu par simulation
...... δ₃ Puissance empirique obtenu sur images réelles
—— δ₃ Puissance de détection théoriquement calculée

FIG. 8

—— $\widehat{\Lambda}_3$ Sous l'hypothèse $H_1$
—— $\widehat{\Lambda}_3$ Sous l'hypothèse $H_0$

# EP 2 825 995 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Digital camera identification from sensor pattern noise. **LUKAS, J. ; FRIDRICH, J. ; GOLJAN, M.** Information Forensics and Security. IEEE Transactions, Juin 2006, vol. 1, 205-214
- Determining Image Origin and Integrity Using Sensor Noise. **CHEN, M. ; FRIDRICH, J. ; GOLJAN, M. ; LUKAS, J.** Information Forensics and Security. IEEE Transactions, Mars 2008, vol. 3, 74-90
- Image Steganography : Concept and Practice. **M. KHARRAZI ; H. T. SENCAR ; N. MEMON.** Lecture Notes Series, Institute for Mathematical Sciences. National University of Singapore, 2004
- **HEALEY, G.E. ; KONDEPUDY, R.** Radiometric CCD camera calibration and noise estimation. *IEEE Transaction on Pattern Analysis and Machine Intelligence,* 1994, vol. 16 (3), 267-276
- **FOI, A. ; TRIMECHE, M. ; KATKOVNIK, V. ; EGIAZARIAN, K.** Practical Poissonian-Gaussian Noise Modeling and Fitting for Single-Image Raw-Data. *IEEE Transactions on Image Processing,* Octobre 2008, vol. 17 (10), 1737-1754
- **MAILLARD, J.-B. ; LEVESQUE, D. ; DESCHENES, F.** Detection of digital processing of images through a realistic model of CCD noise. *International Conference on Pattern Recognition, ICPR,* 08 Décembre 2008
- **SHAO, J.** Asymptotic distribution of the weighted least squares estimator. *Annals of the Institute of Statistical Mathematics,* 1989, vol. 41 (2), 365-382
- **LEHMANN, E.L. ; ROMANO, J.P.** Testing Statistical Hypotheses. Spinger, 2005
- Digital camera identification from sensor pattern noise. **LUKAS, J. ; FRIDRICH, J. ; GOLJAN, M.** Information Forensics and Security. IEEE Transactions, Juin 2006, vol. 1, 205-214